# EUROPÄISCHE PATENTSCHRIFT

(11) **EP 0 985 493 B1**
(45) Veröffentlichungstag und Bekanntmachung des Hinweises auf die Patenterteilung: **14.01.2004**
(21) Anmeldenummer: 99116596.0
(22) Anmeldetag: 25.08.1999
(51) Int. Cl.: B23Q 17/20, B23Q 17/24, B23Q 15/02, B24B 3/00, B24B 49/00

(54) **Werkzeugmaschine mit automatischer Prozesssteuerung/Überwachung**
Machine tool with automatic process control/monitoring
Machine-outil avec commande/surveillance automatique d'opérations

(30) Priorität: 08.09.1998 DE 19840801
(43) Veröffentlichungstag der Anmeldung: 15.03.2000
(73) Patentinhaber: Walter AG, 30827 Garbsen (DE)
(72) Erfinder: Sachs, Carsten, 30455 Hannover (DE); Wenke, Oliver, 31535 Neustadt (DE); Morcom, Christopher, 29223 Celle (DE)
(74) Vertreter: Patentanwälte Rüger, Barthelt & Abel

(56) Entgegenhaltungen:
- EP-A- 0 803 323
- DE-A- 2 211 590
- DE-A- 3 521 710
- DE-A- 3 610 160
- DE-A- 4 032 361
- DE-A- 4 242 906
- JP-A- 1 164 547
- JP-A- 61 131 854
- JP-A- 61 226 251
- US-A- 4 693 038

## Beschreibung

Die Erfindung betrifft eine Vorrichtung sowie ein Verfahren zum spanenden Bearbeiten, vorzugsweise Schleifen von Werkstücken.

Werkzeugschleifmaschinen sind häufig mit einem Werkzeuglader ausgestattet, der über lange Zeit einen vollautomatischen Fertigungsprozeß ohne Eingriff eines Bedieners erlaubt. Die von dem Werkzeuglader in die Schleifmaschine gegebenen Werkzeuge werden von der Werkzeugschleifmaschine mit vorgegebenen Maßen präzise geschliffen. Hier geht es insbesondere um die Schneidkantengeometrien, d.h. die Präzision der Schleifbearbeitung der Schneidkanten und der sich an die Schneidkanten anschliessenden Flächen der Werkzeuge (Freiflächen, Spanflächen).

Aus der DE 4242906 C2 ist eine solche numerisch gesteuerte Schleifmaschine zum Schleifen von vorzugsweise metallischen Werkstücken, insbesondere Werkzeugen bekannt. Diese Schleifmaschine weist einen in Richtung mehrere Achsen linear und schwenkend bewegbaren Schleifkopf mit einer zugeordneten Verstelleinrichtung und eine Werkstückaufnahme auf, die ebenfalls in Richtung einer oder mehrerer Achsen bewegbar gelagert ist. Eine Steuereinrichtung führt die Antriebe der Verstelleinrichtungen und gestattet so das Schleifen der Werkstücke (Zerspanungswerkzeuge), wie bspw. Bohrer, Fräser oder ähnliches, nach einem vorgegebenen Programm, d.h. gemäß von Vorgaben.

Die Toleranzen der Werkzeuge werden mit fortschreitenden Qualitätsanspruch immer enger vorgeschrieben. Für eine konstante Fertigungsqualität ist es deshalb erforderlich, den Einfluss von Störgrößen wie bspw. Temperaturänderungen, Verschleiß der Schleifscheibe und Ungenauigkeiten der Mechanik. exakt zu kompensieren. Dazu kann der laufende Fertigungsprözeß unterbrochen werden, um die Qualität der Werkzeuge über externe Messmittel zu kontrollieren. Die Schleifmaschine muss, falls der Verschleiß fortgeschritten ist, nachgestellt werden, um wieder in der Mittel des Toleranzbereichs zu produzieren.

Produktionsunterbrechungen und manuelle Nachjustagen verhindern oder unterbrechen einen vollautomatischen Betrieb.

Aus der US-A-4693038, der DE-A-2211590, der DE-A-3610160 und der DE-A-3521710 sind jeweils Vorrichtungen und Verfahren zum Außenrundschleifen von Werkstücken bekannt, bei denen eine Schleifscheibe in ständigem Eingriff mit dem zylindrischen Werkstück steht. Außerdem sind Messtaster oder sonstige Sensoren vorhanden, die während des Schleifprozesses in ständigem Messeingriff mit dem Werkstück stehen. Auf diese Weise gestatten die vorbekannten Vorrichtungen eine ständige Fertigungskontrolle und eine Bestimmung des Werkstückdurchmessers während des Schleifvorgangs. Allerdings sind Rückwirkungen des Schleifvorgangs auf das Messergebnis nicht auszuschließen.

Aus der EP-A-0803323 ist es darüber hinaus bekannt, beim Außenrundschleifen von Werkstücken die Messung lediglich einmal während einer Umdrehung des Werkstücks, dabei jedoch immer während des Schleifvorgangs durchzuführen. Auch hier ist eine Rückwirkung des Schleifvorgangs auf die Messung nicht auszuschließen.

Davon ausgehend ist es Aufgabe der Erfindung, eine Werkzeugschleifmaschine und ein Schleifverfahren zu schaffen, mit denen ein unterbrechungsfreier Betrieb möglich ist.

Diese Aufgabe wird mit einer Vorrichtung nach Anspruch 1 bzw. einem Verfahren nach Anspruch 11 gelöst.

In die Schleifmaschine oder sonstige Bearbeitungsmaschine ist ein Sensor in Form einer Messeinrichtung integriert, der die Prozeßüberwachung erheblich vereinfacht. Mit der Messeinrichtung sind einige, ggfs. alle, qualitätsrelevanten Maße erfassbar. Das Werkzeug kann während und nach dem Bearbeitungsprozeß (Schleifprozeß) kontrolliert werden. Dadurch kann oft sogar die Endkontrolle des Werkzeugs entfallen, weil der Sensor die qualitätsrelevanten Maße bereits erfasst hat.

Anhand der einen Teil der Schleifmaschine bildenden Messeinrichtung können die Schleifparameter nachgesteuert werden, was zu einer konstant hohen Fertigungsqualität und einer Reduzierung von Ausschussteilen führt. Die Fertigung kann dadurch deutlich effizienter werden und ggfs. eine manuelle Kontrolle durch einen Bediener entfallen.

Die Messeinrichtung wird vorzugsweise intermitierend betrieben. Dies bedeutet, dass der Bearbeitungsvorgang und der Messvorgang zeitlich getrennt ablaufen. Während der Messung wird an dem Werkzeug nicht gearbeitet (geschliffen). Die von der Messung gelieferten Daten können dazu dienen, die Daten anhand derer das Schleifprogramm die Bearbeitungseinrichtung bzw. deren Stellmittel steuert, zu verändern bzw. zu korrigieren oder es kann anhand der durch die Messung gewonnenen Daten ein Korrekturdatensatz bereitgestellt werden, der von dem Schleifprogramm mit den die Schleifparameter vorgebenden Daten verknüpft wird. Der Korrekturdatensatz kann eine Tabelle mit Offsetgrößen und Proportionalfaktoren sein, die auf die Schleifdaten angewendet bzw. mit diesen verknüpft werden.

Die Bearbeitungseinrichtung kann sowohl einen als auch mehrere Schleifköpfe mit jeweils einer oder mehreren Schleifscheiben aufweisen. Vorzugsweise ist der Schleifkopf in mehreren Richtung verstell- und/oder schwenkbar, so dass relativ komplizierte Werkzeuggeometrien bearbeitet werden können.

Auch das Werkstück kann von einer verstelleinrichtung positionierbar sein, um eine möglichst große Vielfalt von Werkstücken bearbeiten zu können. Die Verstelleinrichtung steht vorzugsweise ebenfalls unter der Steuerung der zentralen Steuereinrichtung, wobei die Daten oder das Programm zum Bewegen des Werkstücks ebenfalls der Korrektur anhand der von der Messeinrichtung gelieferten Daten unterworfen sein können.

Die Messeinrichtung ist vorzugsweise als berührungslose optische Messeinrichtung ausgebildet. Dies gestattet eine schenelle Erfassung größerer Geometrien oder Teilgeometrien und somit eine hohe Produktivität. Die Messeinrichtung ist vorzugsweise von einer Positioniereinheit getragen, die eine Bewegung der Messeinrichtung gestattet. Damit kann die Messeinrichtung während der Bearbeitung (Schleifbearbeitung) des Werkstücks (Zerspanungswerkzeug) aus dem Bearbeitungsbereich heraus gefahren werden, so dass der Schleifkopf und/oder andere Bearbeitungswerkzeuge ungehindert an das Werkstück herangefahren werden können. Zur Durchführung der Messung wird die Messeinrichtung dann an das Werkstück herangefahren. Hier ist es in mehrere Messpositionen überführbar. Bspw. kann die Mesaeinrichtung bezüglich einer Längs- oder Drehachse des als Werkstück anzusehenden Zerspanungswerkzeugs um eine rechtwinklig zu dieser Achse stehende Achse geschwenkt werden. Damit kann die Messeinrichtung mit ihrer Messachse sowohl radial als auch axial zu dem Zerspanungswerkzeug positioniert werden. Damit ist sowohl die Vermessung im Wesentlichen axial eingestellter seitlicher Schneidkanten als auch die Vermessung der Stirnseite mit radial eingestellten Schneidkanten möglich. Zur Relativpositionierung der Messeinrichtung zu dem Werkstück können insbesondere die Achsen des Werkstückträgers benutzt werden. Dies ermöglicht die Vermessung aller Seiten des Werkstücks ohne zusätzlichen Positionieraufwand für die Messeinrichtung.

Ist die Messeinrichtung als optische Messeinrichtung ausgebildet, ist sie vorzugsweise sowohl nach dem Streif- oder Durchlichtprinzip, als auch nach dem Auflichtprinzip betreibbar. Es hat sich dabei zur Durchführung genauer Messung von scharfkantigen Werkzeugen die optische Messung mit einer CCD-Kamera bewährt, wobei mit der Durch- oder Streiflichtbeleuchtung die Außenkontur und axiale Position des Werkzeugs erfassbar ist. Eine Auflichtbeleuchtung gestattet die Aufnahme innerer Maße, wie bspw. Spanwinkel oder Spanraumtiefe und die exakte Bestimmung der radialen Position. Dadurch kann ein Mechanischer Taster ersetzt werden. Um eine hohe Auflichtintensität zu gestatten, wird bei einer bevorzugten Ausführungsform eine Beleuchtungseinheit für die Auflichtmessung im Bezug auf die Messeinrichtung beweglich gelagert. Soll eine Auflichtmessung durchgeführt werden, wird die Beleuchtungseinheit mittels einer Verstelleinrichtung an die Werkstückoberfläche herangefahren, um hier eine hohe Lichtintensität zu erhalten.

Die anhand der Messung gewonnenen Daten können zunächst insbesondere daraufhin untersucht werden, ob und wie weit ein Messmerkmal vom Sollwert abweicht. Eine Nachsteuerung nur dann, wenn bestimmte Eingriffsgrenzen überschritten sind, führt zu einer Stabilisierung des Regelsystems. Außerdem ist es möglich, die Nachsteuerung auf Fälle zu beschränken, in denen das Messmerkmal mehrfach aufeinanderfolgend vom Sollwert abweicht. Damit können kurzfristige Abweichungen vom Sollwert ignoriert werden, die auch durch eine mögliche Verschmutzung des Werkzeuge am Messort bedingt sein können. Die gewonnenen radialen und axialen Positionen können zur Positionierung des Werkzeugs für das Schleifen verwendet werden.

Eine abschliessende Messung entscheidet, ob ein Fertigungsschritt wiederholt werden muss, oder ob der Schleifprozeß beendet werden kann. Falls ein Fehler nicht durch eine erneute Bearbeitung korrigiert werden kann, wird das Werkstück automatisch als Ausschuss erkannt. Für nachfolgende Bearbeitungen wird das Schleifprogramm nachgestellt, um nicht erneut Ausschuss zu produzieren.

Mit den während des Prozeß durchgeführten Messungen läßt sich eine Fehlertendenz erkennen, bevor sie zur Produktion von Ausschussteilen führt. Ergeben sich bspw. durch Temperaturänderungen oder Verschleiß an den Schleifscheiben Maßänderungen, können diese noch in der Fertigungstoleranz ausgeregelt werden. Dazu ist es möglich, mittels eines von der Steuereinrichtung durchgeführten Programms eine Trendüberwachung durchzuführen, die bereits bei Annäherung an eine Toleranzgrenze eine Nachstellung der Schleifparameter vornimmt.

Es ist sowohl möglich, jedes einzelne Teil abschliessend sowie zusätzlich während einer oder mehrerer Unterbrechungen seines Bearbeitsvorgangs zu vermessen. Hier können Arbeitspausen genutzt werden, die ohnehin zur Positionierung des Schleifkopfs erforderlich sind. Darüber hinaus kann es jedoch auch möglich sein, nur bei einigen Werkstücken eines Loses Zwischenmessungen während der Bearbeitung durchzuführen und alle anderen Werkstücke lediglich endzuvermessen. Letztendlich ist es bei etwas geringeren Qualitätsanforderungen unter Umständen auch möglich, lediglich Stichprobenmessungen durchzuführen.

Weitere Einzelheiten vorteilhafter Ausführungeformen der Erfindung ergeben sich aus der Zeichnung, der zugehörigen Beschreibung oder Unteransprüchen.

In der Zeichnung ist ein Ausführungsbeispiel der Erfindung veranschaulicht. Es zeigen:
- Fig. 1: eine Werkzeugschleifmaschine mit einer rechnergestützten Steuereinrichtung und in Verkettung mit einem Lader, in einer schematisierten Vorderansicht,
- Fig. 2: die Werkzeugschleifmaschine nach Figur 1, in einer Seitenansicht,
- Fig. 3: die optische Messeinrichtung der Werkzeugschleifmaschine nach den Figuren 1 und 2, in schematisierter Schnittdarstellung,
- Fig. 4: die Steuereinrichtung der Werkzeugschleifmaschine nach den Figuren 1 und 2, und deren Zusammenwirken mit Bedienelementen und Sensoren in einer achematischen Blockdarstellung, und
- Fig. 5: den Steuerungsablauf der Werkzeugschleifmaschine nach den Figuren 1 und 2, und der Steuereinrichtung nach Figur 4, als stark vereinfachtes schematisches Flussbild.

### Beschreibung:

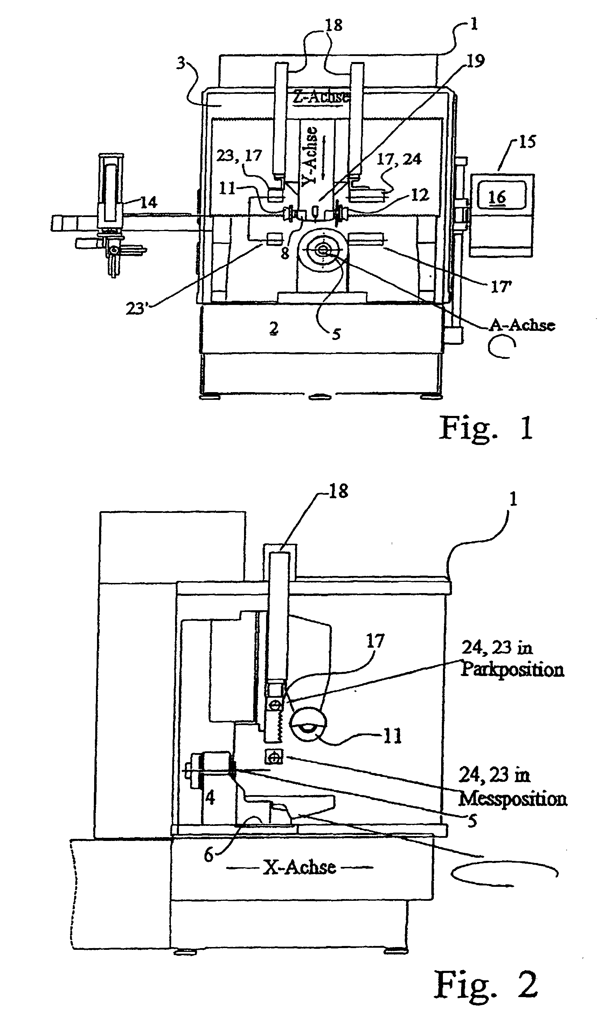

In Figur 1 ist eine Werkzeugschleifmaschine 1 in schematischer Darstellung in einer Ansicht von vorn veranschaulicht. Die Werkzeugschleifmaschine 1 weist einen Grundrahmen oder Tisch 2 und einen mit diesem verbundenen oberen Maschinenteil oder -rahmen 3 auf. An dem Tisch 2 ist eine auch aus Figur 2 ersichtliche Werkstückaufnahme 4 gelagert, die eine Spanneinrichtung 5 zur Aufnahme des Werkstücks aufweist. Das mit der Schleifmaschine 1 zu bearbeitende Werkstück ist ein Zerspanungswerkzeug, bspw. ein Bohrer, eine Räumnadel oder ein ähnliches linear und/oder drehend zu bewegendes Werkzeug. Die Werkzeugschleifmaschine 1 dient insbesondere dazu, die Schneidengeometrie an dem Werkzeug auszubilden oder wiederherzustellen.

Die Werkstückaufnahme 4 (Fig. 2) ist vorzugsweise in oder um drei Achsen bewegbar. Ein lediglich symbolisch veranschaulichter Schlitten 6 gestattet die Verschiebung der Werkstückaufnahme 4 in einer ersten Richtung X. Zusätzlich zu der horizontalen Achse X ist die Werkstückaufnahme 4 um eine Vertikalachse C schwenkbar angeordnet. Zur gezielten Positionierung dient ein Schwenkancrieb, der nicht weiter veranschaulicht ist.

Die Werkstückspanneinrichtung 5 ist, wie in Figur 1 angedeutet ist, um eine zu der X-Achse vorzugsweise parallelen Achse drehbar gelagert, wobei ein entsprechender Stellantrieb gezielte Positionierungen vornehmen kann.

An dem oberen Maschinenrahmen 3 ist über einen Kreuzschlitten entlang einer vertikalen Y-Achse und einer horizontalen Z-Achse verstellbar ein Schleifkopf 8 verstellbar gelagert, der wenigstens eine, im vorliegenden Fall zwei oder mehrere drehend angetriebene Schleifscheiben 11, 12 aufweist. Bedarfsweise kann der Schleifkopf 8 in weiteren Richtungen bewegbar sein. Bspw. kann er schwenkbar gelagert sein. Zur Betätigung des Schleifkopfs 8, d.h. zu seiner Verstellung in Y- oder Z-Richtung dienen Stellantriebe, die in Figur 1 nicht weiter veranschaulicht sind.

Die Steuerung aller Stellantriebe sowie die Steuerung eines der Schleifmaschine 1 zugeordneten Laders 14, der dazu dient, Rohlinge in die Spanneinrichtung 5 zu befördern und fertig bearbeitete Werkstücke aus dieser herauszunehmen, erbringt eine Steuereinrichtung 15. Diese ist bspw. eine Rechnersteuerung mit einem Display 16, sowie mit Bedienelementen.

Zur Durchführung von Messungen an dem zu schleifenden Zerspanungswerkzeug W ist die Werkzeugschleifmaschine mit einer Messeinrichtung 17 versehen, die berührungslos arbeitet und der Vermessung des teilweise oder fertiggeschliffenen Zerspanungswerkzeugs dient. Die Messeinrichtung 17 ist an ein oder zwei, bspw. pneumatisch bewegten Linearachsen, vorzugsweise in Y-Richtung bedarfsweise aber auch in anderen Richtung bewegbar gelagert. Dazu dienen Pneumatikantriebe 18, die ebenfalls der Steuerung der Steuereinrichtung 15 unterliegen. Die Messeinrichtung 17 kann in eine Parkposition überführt werden, in der sie von dem Zerspanungswerkzeug W und der Werkzeugaufnahme 4 entfernt ist. Sie ist somit aus dem Arbeitsbereich herausgefahren und stört den Bearbeitungsablauf nicht. Zur Durchführung einer Messung kann die Messeinrichtung 17 in eine Messposition verfahren werden, in der sie in Figur 1 mit 17' bezeichnet ist. In dieser Messposition liegt das Zerspanungswerkzeug im Lichtweg der optischen Messeinrichtung 17 in einer Fokusebene.

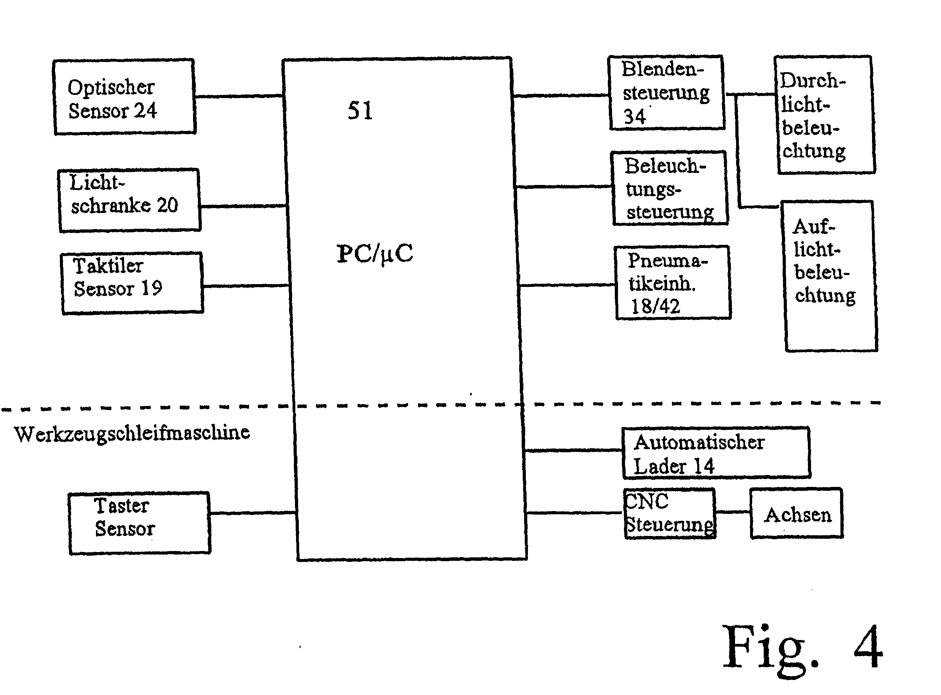

Bei der dargestellten fünfachsigen Werkzeugschleifmaschine 1 ist die Messeinrichtung 17 vertikal bewegbar. Eine Anpassung an andere Achskonfigurationen kann bspw. mit anderen Bewegungsrichtungen der Messeinrichtung 17 leicht vorgenommen werden. Weitere Sensoren wie ein taktiler Sensor 19 und einen Lichtschranke 20 (Figur 4) können bedarfsweise vorgesehen werden, und ermöglichen eine beschleunigte Ermittlung der Orientierung und der äußeren Abmessungen des Zerspanungswerkzeugs W. Je nach Art der Messmerkmale ist der taktile Sensor 19 oder die Lichtschranke 20 oder eine Kombination von beiden vorteilhaft zu verwenden. Die Lichtschranke 20 dient im Wesentlichen der groben Ermittlung der Länge des Zerspanungswerkzeugs und der Definition eines Schutzbereichs um das Zerspanungswerkzeug, um die mögliche Kollision bei Fehlbedienung der Werkzeugschleifmaschine 1 auszuschliessen.

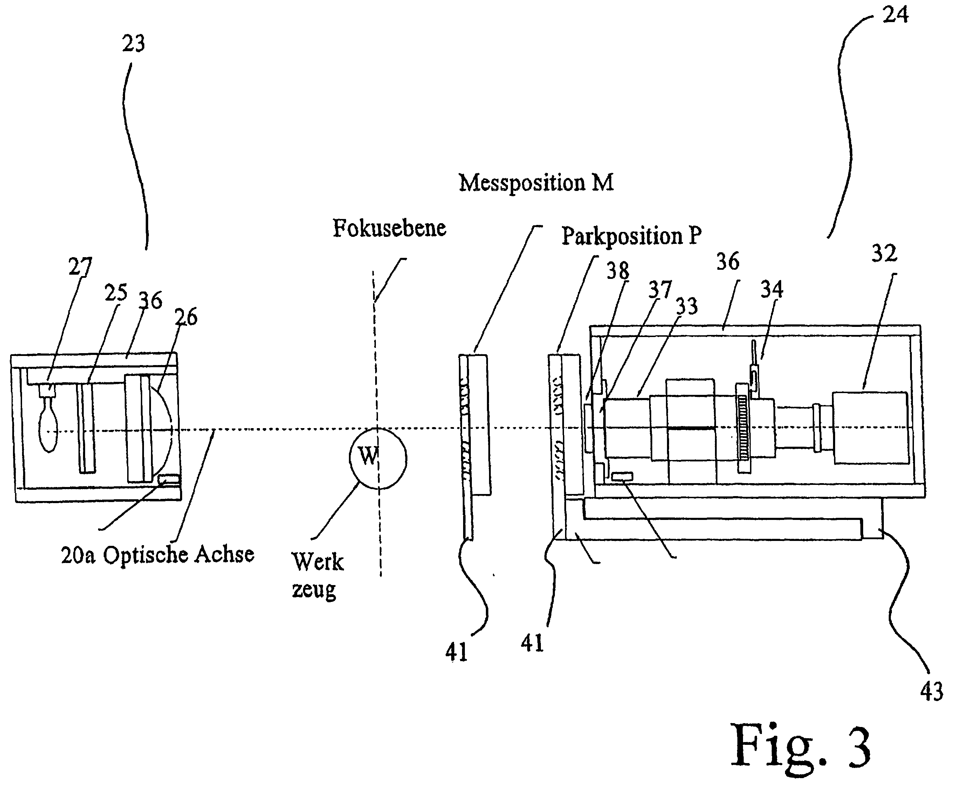

In Figur 3 ist die Messeinrichtung 17 gesondert veranschaulicht. Zu ihr gehört eine Beleuchtungseinheit 23 zur Erzeugung eines im Wesentlichen parallelen Lichtbündels, das von dem Zerspanungswerkzeug W mehr oder weniger abgeschattet wird, sowie ein optischer Sensor 24, der das teilweise abgeschattete Lichtbündel auffängt. Während die Beleuchtungseinheit 23 an dem in Figur 1 linksseitigen Pneumatikzylinder gehalten und von diesem betätigt wird, wird der Sensor 24 von dem in Figur 1 rechtsseitigen Pneumatikzylinder 18 positioniert. Somit ist die Beleuchtungseinheit 23 unabhängig von dem optischen Sensor 24 von Messposition in Parkposition überführbar.

Die Beleuchtungseinheit 23 enthält eine Hälfte 20a der Lichtschranke 20, während der Sensor 24 eine andere Hälfte 20b der Lichtschranke 20 enthält. Das Zerspanungswerkzeug W liegt im Lichtweg und unterbricht einen zwischen den Hälften 20a, 20b der Lichtschranke 20 laufenden Lichtstrahl.

Die Beleuchtungseinheit 23 weist zur Erzeugung des parallelen Lichtbündels ein Blendensystem 25 und ein Linsensystem 26 auf. Diese bilden einen Kollimator. Zur Lichterzeugung dient eine nahezu punktförmige Quelle 27. Alternativ kann ein Laser als Beleuchtungseinheit dienen, dem eine Strahlaufweitung nachgeschaltet ist.

Zu dem Sensor 24 gehört eine CCD-Kamera 32. Diese kann einen Zeilenkamera oder eine Matrixkamera sein. Vor der CCD-Kamera 32 ist eine telezentrische Optik 33 angeordnet, die eine pneumatische Blendensteuerung 34 aufweist. Die CCD-Kamera 32, deren telezentrische Optik 33 und die Blendensteuerung 34 sind in einem kühlschmierstoff- und öldichten Schutzgehäuse 36 angeordnet, dessen Lichteintrittsöffnung von einem Schutzglas 37 verschlossen ist. Vor dem Schutzglas 37 sind Luftdüsen 38 angeordnet, mit denen vor dem Schutzglas 37 ein Luftstrom erzeugt wird. Dieser verhindert, dass Kühlschmierstoffspritzer an das Schutzglas 37 gelangen.

Die Messeinrichtung 17 ist alternativ für die Durchführung von Auflichtmessungen eingerichtet. Dazu ist eine Auflichtbeleuchtungseinrichtung 41 vorgesehen, die konzentrisch zu einer optischen Achse O angeordnet ist. Die optische Achse 0 ist parallel zu dem von der Beleuchtungseinheit 23 ausgesandten Lichtbündel und zugleich die optische Achse des Sensors 24. Die Auflichtbleuchtung 41 ist parallel zu der optischen Achse O von einer Parkposition P in eine Messposition M verstellbar. Dazu dient ein Pneumatikzylinder 42, der die Auflichtbeleuchtung 41 mit einem das Gehäuse 36 tragenden Träger 43 verbindet.

Während die Beleuchtungseinheit 23 zur Beleuchtung des Werkstücks W im Streiflicht und somit zur Erfassung ihrer Kantengeometrie dient, ist die Auflichtbleuchtung 41 für die inneren Maße notwendig. Um eine hohe Lichtintensität zu erreichen, die zur Messung des Werkstücks W mit Auflicht erforderlich sein kann, weist die Auflichtbeleuchtung 41 eine Lichtfokussierung auf das Messobjekt (Werkzeug W) auf. Die Kombination von Auflicht- und Durchlichtmessung erlaubt die Ermittlung von nahezu allen qualitätsrelevanten Merkmalen des Werkzeugs. Die pneumatische Blendensteuerung 34 gestattet den Wechselbetrieb zwischen Durchlicht und Auflicht. Die Blendensteuerung 34 ist wie die gesamte Messeinrichtung 17 an die Steuereinrichtung 15 angeschlossen. Diese geht gesondert und schematisch aus Figur 4 hervor:

An eine zentrale elektronische Steuereinheit 51, die von einem PC oder einem Mikrorechner µc gebildet sein kann, ist die Werkzeugschleifmaschine 1 mit ihren einzelnen Organen, d.h. einem Taster oder Sensor, dem automatischen Lader 14 der CNC-Steuerung aller fünf Achsen, sowie ggfs. weiterer Einheiten wie Pumpen, Antriebsmotoren usw. angeschlossen. Zusätzlich übernimmt die Steuereinheit 51 Signale von dem optischen Sensor 24, der Lichtschranke 20 und dem taktilen Sensor 19. Von der Steuereinrichtung 51 werden außerdem die Blendensteuerung 34, die Pneumatikeinheiten 42, 18 und eine Beleuchtungssteuerung 52 gesteuert, die die Beleuchtungseinheit 23 und die Auflichtbleuchtung 41 steuert.

Die insoweit beschriebene Werkzeugschleifmaschine 1 arbeitet wie folgt:

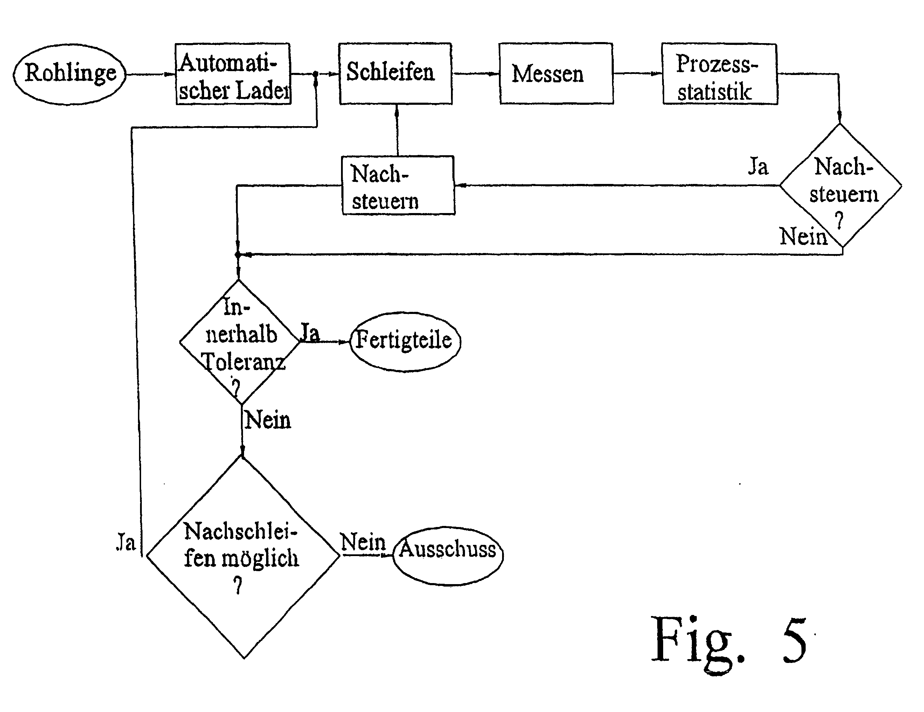

Der Lader 14 führt der Spanneinrichtung 5 zunächst einen Rohling zu, wie in Figur 5 schematisch veranschaulicht ist. Danach startet die Steuereinheit 51 ein Schleifprogramm, das werkzeugspezifisch vorgegeben ist. Das Schleifprogramm enthält alle Daten und Algorithmen, die zur Verstellung der Achsen der Werkzeugaufnahme 4 und des Schleifkopfs 8 erforderlich sind. Bei einer bevorzugten Ausführungsform wird der Schleifvorgang nicht in einem Zug durchlaufen. Wird bspw. eine Freifläche geschliffen, wird vor Beendigung des Schleifvorgangs eine Unterbrechung vorgenommen. Während der Schleifkopf 8 etwas von dem Werkstück W entfernt wird, werden die Achsen 18 angesteuert, so dass die Beleuchtungseinheit 23 und der Sensor 24 zu dem Werkstück W gelangen. Die Lichtschranke 20 dient dabei der Positionierung der Messeinrichtung 17. Soll nun bspw. die die Freifläche begrenzende Schneidkante vermessen werden, bleibt die Auflichtbleuchtung 41 in Parkposition und der Schatten der Schneidkante wird von der CCD-Kamera 32 registriert. Die Lage des Schattens und seine Bewegung bei langsamer Drehung des Werkzeugs W werden von Steuereinheit 51 ausgewertet und in Abmessungen bzw. Maße umgerechnet.

Soll jedoch eine Auflichtmessung durchgeführt werden, bspw. zur Vermessung von Flächen oder Ausnehmungen, kann die Beleuchtungseinheit 23 in Parkposition verbleiben oder vorzeitig in diese zurückgefahren werden. Jedoch wird durch Ansteuerung des Pneumatikzylinders 42 die Auflichtquelle 41 aus ihrer Parkposition P in ihre Messposition M überführt, um die Lichtintensität an dem Messort auf ein hohes Maß zu erhöhen, und die Blendensteuerung 34 wird auf Auflichtmessung umgestellt.

Anhand der durchgeführten Messung werden in einem Block "Prozeßstatistik" einzelne charakteristische Messwerte, wie Sollwert und Toleranzen und Eingriffsgrenzen oder Messmerkmale bestimmt. In dem nächstfolgenden Funktionsblock "Nachsteuern?" geprüft. In diesem Funktionsblock werden die gemessenen und nachgerechneten, ggfs. statistisch nachbereiteten Messwerte, oder aus diesen ermittelte Rechenwerte mit den Eingriffsgrenzen verglichen. Liegen die Messwerte innerhalb dieser Eingriffsgrenzen, ist keine Nachstellung des Schleifvorgangs erforderlich und ein Fertigteil liegt vor. Falls nein, muss geprüft werden, ob ein Nachschleifen möglich ist. Dies ist nur bei Übermaß möglich, und bei diesem Fall muss das Teil erneut dem Schleifvorgang zugeführt werden. Bei Untermaß ist ein Ausschussteil erzeugt worden.

In dem Funktionsblock "Nachsteuern" wird der Schleifprozess nachgestellt und die Werkstückmaße werden in nachfolgenden Funktionsblöcken auf Toleranz geprüft.

Unabhängig davon, wie die Nachstellung des Schleifprogramms im Einzelnen abläuft, werden die durch Bildverarbeitung gewonnenen Messdaten aufgearbeitet, um Abweichungen der Messmerkmale vom Sollwert zu erkennen. Zur Stabilisierung des Regelsystems wird eine Korrektur der Schleifparameter (Nachsteuerung) nur dann durchgeführt, wenn die Eingriffsgrenzen überschritten werden. Eine kurzfristige Abweichung vom Sollwert kann auch durch eine mögliche Verschmutzung des Werkzeugs am Messort bedingt sein und hat deshalb nicht sofort eine Veränderung der Schleifparameter zur Folge.

Das Ergebnis der abschliessenden Messung entscheidet, ob ein Fertigungsschritt wiederholt. werden muss, oder ob der Schleifprozeß beendet werden kann. Falls ein Fehler nicht durch eine erneute Bearbeitung korrigiert werden kann, wird das Teil automatisch als Ausschuss erkannt.

Es ist auch möglich, mit der Messeinrichtung 17 ein fertiggeschliffenes Werkzeug komplett zu messen, ohne die Schleifmaschine nachzusteuern. In diesem Fall werden die Ist-Werte erfasst und mit den Sollwerten und Toleranzen verglichen und grafisch/alphanumerisch dargestellt. Sie können auch protokolliert werden. Eine Nachsteuerung erfolgt in diesem Fall nicht.

Der Einsatz eines optisch/taktilien Nachsteuerungssensors ist nicht auf Schleifmaschinen beschränkt, sondern kann in nahezu allen NC gesteuerten Fertigungssystemen eingesetzt werden. Die vorhandenen Achsen werden zur Positionierung des Messobjekts zum Sensor benutzt. Bei der Zerspanungsmaschine 1 dient bspw. die Achse A dazu, eine Umfangsschneide des Zerspanungswerkzeugs durch das Bildfeld der CCD-Kamera 32 zu drehen. Dies stellt eine kostengünstige Möglichkeit dar, eine konstante Qualität der Fertigungsteile zu produzieren. Das Werkstück muss zur Vermessung weder ausgespannt werden, noch ist ein manueller Eingriff erforderlich. Dies ergibt einen automatischen Fertigungsablauf.

Die Verwendung eines optischen Sensors in Verbindung mit einem modularen Softwarepaket zur Bildauswertung erlaubt die Erfassung von allen Geometriemerkmalen wie Längendurchmesser und Winkel, sowie Formmerkmalen. Der berührungslos messende optische Sensor gemäß Figur 3 ist besonders geeignet für empfindliche Messobjekte und daher aufgrund des Einbaus in ein robustes Schutzgehäuse 36 in vielen Fällen einsetzbar.

Bei normalem Messbetrieb sind beide Pneumatikzylinder 18 ausgefahren und das Messobjekt befindet sich zwischen dem Sensor 24 und der Beleuchtungseinheit 23. Durch Bewegung der X-, Y-, Z- und A-Achse der Werkzeugschleifmaschine 1 kann das Werkzeug W in allen Richtungen in das Messfenster der Kamera 32 positioniert werden. Zur Erfassung der Stirnseite des Messobjekts (Werkzeug W) kann der Pneumatikzylinder 18 der Durchlicht-Beleuchtungseinheit. 23 eingefahren und die C-Achse um 90° geschwenkt werden. Der Sensor 24 bleibt dabei am Platz. Somit erfasst die Kamera 22 die vollständige Oberfläche des Werkzeugs, d.h. seine Umfangsfläche sowie seine Stirnfläche. Nach Durchführung der Messung kann auch der Pneumatikzylinder 18 des Sensors 24 wieder eingefahren werden und der Schleifvorgang wird fortgesetzt. Es kann ein ständiger Wechselbetrieb zwischen Messen und Schleifen durchgeführt werden, wobei jeder Fertigungsschritt ggfs. voll automatisch überwacht werden kann. Am Ende des Schleifprozesses kann eine vollständige Messung des Werkstücks (Zerspanungswerkzeug) als Endkontrolle dienen. Jedoch können die Messungen bedarfsweise auch auf die Endkontrollen oder auch nur auf Stichproben beschränkt werden.

Die Einzelmessungen können, wenn unterschiedliche Formelemente des Zerspanungswerkzeugs W nacheinander geschliffen werden, auf Teilmessungen beschränkt werden. Wird bspw. zunächst eine Spanfläche geschliffen, kann die Prozeßüberwachung in diesem Bearbeitungsschritt auf das Nachmessen dieser Fläche beschränkt werden. Entsprechendes gilt für die Bearbeitung anderer Flächen und Kanten.

Bei einer Werkzeugschleifmaschine 1 ist zur Überwachung der Prozeßführung eine Messeinrichtung 17 vorgesehen, die vorzugsweise als kombiniertes Durchlicht-Auflichtmesssystem ausgebildt ist. Dieses ermöglicht sowohl die präzise Erfassung von Kanten, bspw. Schneidkanten im Streif- oder Durchlichtmessverfahren, als auch die Vermessung von Flächen und Vertiefungen im Auflichtverfahren. Die automatische Kontrollmessung mittels dieses Messsystems 17 gestattet es der angeschlossenen Steuereinrichtung 15, die Prozeßparameter für den Schleifvorgang automatisch nachzustellen, so dass Maßänderungen infolge von Temperaturdrift, mechanischen Ungenauigkeiten der Mechanik der Schleifmaschine oder Schleifscheibenverschleiß automatisch ausgeglichen werden. Dies ermöglicht eine Fertigung von größeren Losen innerhalb sehr enger Toleranzen und mit hoher Präzision.

## Patentansprüche

1. Werkzeugschleifmaschine (1) zum Schleifen von Zerspanungswerkzeugen,
mit einem Schleifkopf (8), der wenigstens eine Schleifscheibe (11, 12) und ein Stellmittel (Y-Achse, Z-Achse) aufweist, mit dem der Schleifkopf (8) und/oder das Werkstück in Bezug aufeinander positionierbar sind,
mit einer Steuereinrichtung (15), die mit dem Stellmittel verbunden ist und dieses zur Erzeugung einer vorgegebenen Form des Zerspanungswerkzeugs (W) ansteuert,
mit einer Messeinrichtung (17), die an der Werkzeugschleifmaschine (1) vorgesehen und mit der Steuereinrichtung (15) verbunden ist und mit der nach Durchführung des Schleifvorgangs eine Messung an dem Zerspanungswerkzeug (W) ausführbar ist,
wobei die Steuereinrichtung (15) derart beschaffen ist, dass sie ein Bearbeitung programm unterbricht und inder entstehenden Bearbeitungspause mittels der Messeinrichtung (17) wenigstens eine Messung durchführt und anhand der Messung eine Korrektur der An- steuerung des Stellmittels vornimmt.

2. Werkzeugschleifmaschine nach Anspruch 1, **dadurch gekennzeichnet, dass** zu dem Stellmittel (Y-Achse, Z-Achse) mehrere voneinander unabhängig ansteuerbare Achsen mit einen Antrieben gehören, die von der Steuereinrichtung ansteuerbar sind.

3. Werkzeugschleifmaschine nach Anspruch 1, **dadurch gekennzeichnet, dass** das Zerspanungswerkzeug (W) in einer Halteeinrichtung (4, 5) gehalten ist.

4. Werkzeugschleifmaschine nach Anspruch 3, **dadurch gekennzeichnet, dass** die Halteeinrichtung (4, 5) eine Verstelleinrichtung (A-Achse) aufweist, mittels derer, das Zerspanungswerkzeug (W) in Richtung ein oder mehrerer. Achsen bewegbar und/oder um ein oder mehrere Achsen drehbar ist, wobei die Verstelleinrichtung (A-Achse) von der Steuereinrichtung steuerbar ist.

5. Werkzeugschleifmaschine nach Anspruch 1, **dadurch gekennzeichnet, dass** die Messeinrichtung (17) von einer Positioniereinheit (18) getragen ist, mittels derer die Messeinrichtung (17) wenigstens in einer Richtung (Y-Achse) linear und/oder schwenkend bewegbar ist.

6. Werkzeugschleifmaschine nach Anspruch 1, **dadurch gekennzeichnet, dass** die Messeinrichtung (17) eine berührungslose, vorzugsweise eine optische Messeinrichtung ist, die nach dem Auflicht- und/oder Durchlichtprinzip arbeitet.

7. Werkzeugschleifmaschine nach Anspruch 1, **dadurch gekennzeichnet, dass** die Messeinrichtung (17) wahlweise nach dem Auflicht- und dem Durchlichtprinzip arbeitet und zwischen beiden Betriebsarten umschaltbar ist.

8. Werkzeugschleifmaschine nach Anspruch 1, **dadurch gekennzeichnet, dass** die Steuereinrichtung (15) den Bearbeitungsvorgang anhand eines vorgegebenen Bearbeitungsmusters, d.h. einer Vorgabe (Programm, Tabelle, usw.) eigenständig ausführt und dass sie für den Bearbeitungsvorgang wenigstens eine Messung zur Überprüfung der Einhaltung der Vorgabe ausführt.

9. Werkzeugschleifmaschine nach Anspruch 8, **dadurch gekennzeichnet, dass** die Steuereinrichtung (15) bei Feststellung einer Abweichung zwischen der Vorgabe und der Messung für das aktuelle Werkstück wenigstens dann eine Nachsteuerung vornimmt, wenn eine zulässige Toleranz zunächst überschritten ist und mit der Nachsteuerung die Toleranz erreichbar ist.

10. Werkzeugschleifmaschine nach Anspruch 1, **dadurch gekennzeichnet, dass** die Steuereinrichtung (15) bei Feststellung einer Abweichung zwischen der Vorgabe und der Messung eine Nachsteuerung für das in der Bearbeitungsabfolge nächste Werkstück vornimmt, wenn eine zulässige Toleranz zunächst überschritten ist und mit der Nachsteuerung die Toleranz nicht mehr erreichbar ist.

11. Schleifverfahren zum automatischen Schleifen von Zerspanungswerkzeugen,
wobei die Bearbeitung des Zerspanungswerkzeugs durch eine steuerbare Bearbeitungseinrichtung von einer Steuereinrichtung durch ein Bearbeitungsprogramm gesteuert durchgeführt und gesteuert von dieser Steuereinrichtung unterbrochen wird,
wobei in der entstehenden Bearbeitungspause gesteuert von der Steuereinrichtung mittels einer Messeinrichtung wenigstens eine Messung durchgeführt wird und
wobei das Bearbeitungsprogramm anhand der durchgeführten Messung für die weitere Bearbeitung nachgesteuert wird.

12. Schleifverfahren nach Anspruch 11, **dadurch gekennzeichnet, dass** die Bearbeitung eines Zerspanungswerkzeugs von der Steuereinrichtung wiederholt unterbrochen und in jeder so enstehenden Bearbeitungspause eine Messung vorgenommen und der Bearbeitungsvorgang danach gegebenenfalls mit nachgestelltem Bearbeitungsprogramm fortgesetzt wird.

13. Schleifverfahren nach Anspruch 11, **dadurch gekennzeichnet, dass** die Bearbeitung von Zerspanungswerkzeugen von der Steuereinrichtung lediglich stichprobenhaft unterbrochen und somit nur für einige der zu bearbeitenden Werkstücke eines Loses eine Messung vorgenommen wird.

14. Schleifverfahren nach Anspruch 11, **dadurch gekennzeichnet, dass** die Messung nach Beendigung des Hearbeitungsvorgangs vorgenommen wird und dass das Zerspanungswerkzeug anhand der Messung als Fertigteil oder als außerhalb der Toleranz liegendes Werkstück eingeordnet wird.

15. Schleifverfahren nach Anspruch 14, **dadurch gekennzeichnet, dass** bei außerhalb der Toleranz liegenden Werkstücken überprüft wird, ob ein Nachbearbeitungsvorgang möglich ist und dass, falls ein solcher möglich ist, unmittelbar im Anschluss an die Messung ein Nachbearbeitungsvorgang begonnen wird.

16. Schleifverfahren nach Anspruch 11, **dadurch gekennzeichnet, dass** bei der Messung insbesondere die Geometrie von an dem Zerspanungswerkzeug auszubildenden Schneidkanten und gegebenenfalls sich anschließender Fläche vorgenommen wird.

17. Schleifverfahren nach Anspruch 11, **dadurch gekennzeichnet, dass** zur Bestimmung bzw. Auffindung der Axialposition und der Radialposition des als Werkstück dienenden Zerspanungswerkzeugs eine berührungslos, vorzugsweise eine optisch arbeitende Messeinrichtung verwendet wird.

18. Schleifverfahren nach Anspruch 11, **dadurch gekennzeichnet, dass** zur Relativpositionierung und Bewegung des Werkstücks und der Messeinrichtung vor und während der Messung Achsen genutzt werden, die für das Zerspanungswerkzeug vorgesehen sind, wobei die Messeinrichtung während der Messung vorzugsweise in Ruhe verbleibt.

## Claims

1. Machine tool (1) for grinding cutting tools,
with a grinding head (8), which has at least one grinding disc (11, 12) and an adjusting element (Y-axis, Z-axis), with which the grinding head (8) and/or the workpiece can be positioned relative to one another,
with a control means (15), which is connected to the adjusting element and actuates this to generate a predetermined shape of the cutting tool (W),
with a measuring means (17), which is provided on the machine tool (1) and is connected to the control means (15) and with which a measurement can be performed on the cutting tool (W) after conducting the grinding process,
wherein the structure of the control means (15) is such that it interrupts a machining program and during the pause in machining conducts at least one measurement by means of the measuring means (17) and performs a correction of the actuation of the adjusting element on the basis of the measurement.

2. Machine tool according to Claim 1, **characterised in that** associated with the adjusting element (Y-axis, Z-axis) are several axes, which may be actuated independently of one another, with a drive means, which may be actuated by the control means.

3. Machine tool according to Claim 1, **characterised in that** the cutting tool (W) is held in a holding means (4, 5).

4. Machine tool according to Claim 3, **characterised in that** the holding means (4, 5) has an adjustment means (A-axis), by means of which the cutting tool (W) may be moved in the direction of one or more axes and/or may be rotated around one or more axes, wherein the adjustment means (A-axis) may be controlled by the control means.

5. Machine tool according to Claim 1, **characterised in that** the measuring means (17) is supported by a positioning unit (18), by means of which the measuring means (17) may be moved at least in one direction (Y-axis) in a linear and/or swivelling motion.

6. Machine tool according to Claim 1, **characterised in that** the measuring means (17) is a non-contact, preferably an optical, measuring means, which operates according to the incident light and/or transmitted light principle.

7. Machine tool according to Claim 1, **characterised in that** the measuring means (17) selectively operates according to the incident light and the transmitted light principle and can be switched over between the two types of operation.

8. Machine tool according to Claim 1, **characterised in that** the control means (15) performs the machining process independently on the basis of a predetermined machining pattern, i.e. a preset schedule (program, chart etc.), and that it performs at least one measurement for the machining process to check adherence to the preset schedule.

9. Machine tool according to Claim 8, **characterised in that** upon detection of a deviation between the preset schedule and the measurement, the control means (15) performs a follow-up control for the current workpiece at least when a permitted tolerance has been firstly exceeded and the tolerance can be attained with the follow-up control.

10. Machine tool according to Claim 1, **characterised in that** upon detection of a deviation between the preset schedule and the measurement, the control means (15) performs a follow-up control for the next workpiece in the machining sequence when a permitted tolerance has been firstly exceeded and the tolerance can no longer be attained with the follow-up control.

11. Grinding process for automatic grinding of cutting tools,
wherein the machining of the cutting tool by a controllable machining means is conducted via a machining program in a manner controlled by a control means and is interrupted in a manner controlled by this control means,
wherein in the resulting pause in machining at least one measurement is performed by means of a measuring means in a manner controlled by the control means, and
wherein the machining program is subjected to a follow-up control on the basis of the conducted measurement for further machining.

12. Grinding process according to Claim 11, **characterised in that** the machining of a cutting tool is repeatedly interrupted by the control means and in each of the thus resulting pauses in machining a measurement is performed and the machining process is possibly continued subsequently with a re-set machining program.

13. Grinding process according to Claim 11, **characterised in that** the machining of cutting tools is only interrupted by the control means on a sample basis and therefore a measurement is performed only for some of the workpieces of a batch to be machined.

14. Grinding process according to Claim 11, **characterised in that** the measurement is performed after the machining process has finished, and that on the basis of the measurement the cutting tool is classified as a finished part or as a workpiece outside the permitted tolerance.

15. Grinding process according to Claim 14, **characterised in that** in the case of workpieces outside the permitted tolerance, it is checked whether a finishing process is possible, and that, if such a process is possible, a finishing process is commenced directly after the measurement.

16. Grinding process according to Claim 11, **characterised in that** during measurement in particular the geometry of cutting edges to be provided on the cutting tool and possibly of the adjoining face is performed.

17. Grinding process according to Claim 11, **characterised in that** a non-contact, preferably optically operating, measuring means is used for determination or localisation of the axial position and the radial position of the cutting tool serving as workpiece.

18. Grinding process according to Claim 11, **characterised in that** for the relative positioning and movement of the workpiece and the measuring means before and during the measurement, axes provided for the cutting tool are used, wherein the measuring means preferably remains at rest during the measurement.

## Revendications

1. Affûteuse d'outils (1) pour l'affûtage d'outils de coupe, avec une tête d'affûtage (8) qui porte au moins une meule d'affûtage (11, 12) et un moyen de réglage (axe Y, axe Z), à l'aide duquel la tête d'affûtage (8) et/ou la pièce peuvent être positionnées l'une par rapport à l'autre, avec un dispositif de commande (15), qui est relié au moyen de.réglage et commande celui-ci aux fins de produire une forme prédéterminée de l'outil de coupe (W),
avec un dispositif de mesure (17) qui est prévu sur l'affûteuse (1), est connecté au dispositif de commande (15) et à l'aide duquel une mesure peut être réalisée sur l'outil de coupe (W) à la suite de l'opération d'affûtage,
dans laquelle le dispositif de commande (15) est agencé de telle sorte qu'il interrompt un programme d'usinage, procède à au moins une mesure à l'aide du dispositif de mesure (17) pendant la pause d'usinage résultante et, sur la base de la mesure, opère une correction au niveau de la commande du moyen de réglage.

2. Affûteuse d'outils selon la revendication 1, **caractérisée en ce que** le moyen de réglage (axe Y, axe Z) comprend plusieurs axes commandables indépendamment, avec des entraînements qui peuvent être commandés par le dispositif de commande.

3. Affûteuse d'outils selon la revendication 1, **caractérisée en ce que** l'outil de coupe (W) est tenu dans un dispositif support(4, 5).

4. Affûteuse d'outils selon la revendication 3, **caractérisée en ce que** le dispositif de support (4, 5) comprend un dispositif de réglage (axe A) à l'aide duquel l'outil d'usinage (W) peut être déplacé dans la direction d'un ou de plusieurs axes et/ou tourner autour d'un ou de plusieurs axes, le dispositif de réglage (axe A) étant commandé par le dispositif de commande.

5. Affûteuse d'outils selon la revendication 1, **caractérisée en ce que** le dispositif de mesure (17) est porté par une unité de positionnement (18), à l'aide de laquelle le dispositif de mesure (17) peut être déplacé linéairement et/ou par pivotement au moins dans une direction (axe Y).

6. Affûteuse d'outils selon la revendication 1, **caractérisée en ce que** le dispositif de mesure (17) est un dispositif de mesure sans contact, de préférence un dispositif de mesure optique, qui travaille selon le principe à lumière incidente ou et/ou le principe à lumière réfléchie.

7. Affûteuse d'outils selon la revendication 1, **caractérisée en ce que** le dispositif de mesure (17) travaille de manière sélective selon le principe à lumière incidente ou et/ou le principe à lumière réfléchie et peut être commuté d'un mode de fonctionnement à l'autre.

8. Affûteuse d'outils selon la revendication 1, **caractérisée en ce que** le dispositif de commande (15) exécute de manière autonome le processus d'usinage à partir d'un modèle d'usinage prédéterminé, par exemple à partir d'une consigne (programme, tableau, etc), et **en ce qu'**il effectue pour le processus d'usinage au moins une mesure pour le contrôle du respect de la consigne.

9. Affûteuse d'outils selon la revendication 8, **caractérisée en ce que** le dispositif de commande (15), dans le cas d'un écart constaté entre la consigne et la mesure, pour la pièce en cours au moins, procède à une correction lorsqu'une tolérance admissible est dépassée et que ladite tolérance peut être atteinte avec la correction.

10. Affûteuse d'outils selon la revendication 1, **caractérisée en ce que** le dispositif de commande (15), dans le cas d'un écart constaté entre la consigne et la mesure, procède à une correction pour la pièce suivante dans la séquence d'usinage lorsqu'une tolérance admissible est dépassée et que ladite tolérance ne peut plus être atteinte avec la correction.

11. Procédé d'affûtage pour l'affûtage automatique d'outils de coupe,
dans lequel l'usinage de l'outil de coupe est réalisé par un dispositif d'usinage piloté, sous la commande d'un dispositif de commande au travers d'un programme d'usinage, et est interrompu sous la commande dudit dispositif de commande,
dans lequel, pendant la pause d'usinage, au moins une mesure est réalisée par un dispositif de mesure sous la commande du dispositif de commande et
dans lequel le programme d'usinage est corrigé sur la base de la mesure réalisée pour la poursuite de l'usinage.

12. Procédé d'affûtage selon la revendication 11, **caractérisé en ce que** l'usinage d'un outil de coupe est interrompu à plusieurs reprises par le dispositif de commande, **en ce qu'**une mesure est réalisée pendant la pause d'usinage résultante et en que le processus d'usinage est poursuivi éventuellement avec un programme d'usinage corrigé.

13. Procédé d'affûtage selon la revendication 11, **caractérisé en ce que** l'usinage d'un outil de coupe est interrompu seulement par sondage par le dispositif de commande, et qu'une mesure est réalisée seulement pour quelques unes des pièces à usiner dans un lot.

14. Procédé d'affûtage selon la revendication 11, **caractérisé en ce que** la mesure est réalisée à la fin du processus d'usinage et que l'outil de coupe, sur la base de la mesure, est classé en pièce finie ou en pièce hors tolérances.

15. Procédé d'affûtage selon la revendication 14, **caractérisé en ce que** pour les pièces hors tolérances, on contrôle s'il est possible de procéder à une reprise d'usinage et lorsqu'une telle reprise est possible, on lance un processus de reprise d'usinage.

16. Procédé d'affûtage selon la revendication 11, **caractérisé en ce que** la mesure porte en particulier sur la géométrie d'arêtes de coupe à façonner sur l'outil et le cas échéant sur des surfaces contiguës de celles-ci.

17. Procédé d'affûtage selon la revendication 11, **caractérisé en ce que** pour déterminer ou trouver la position axiale et la position radiale de l'outil de coupe en tant que pièce, on utilise un dispositif de mesure sans contact, de préférence un dispositif de mesure optique.

18. Procédé d'affûtage selon la revendication 11, **caractérisé en ce que** pour le positionnement relatif et le déplacement de la pièce et du dispositif de mesure avant et pendant la mesure, on utilise des axes qui sont prévus pour l'outil de coupe, le dispositif de mesure, de préférence, étant immobile pas pendant la mesure.
